# EUROPEAN PATENT APPLICATION

(11) **EP 4 852 492 A1**
(43) Date of publication of application: **09.12.2026**
(21) Application number: 24925496.2
(22) Date of filing: 23.09.2024
(51) Int. Cl.: H04W 24/02

(54) **COMMUNICATION METHOD AND RELATED DEVICE**

(30) Priority: 23.02.2024 CN 202410205343
(71) Applicant: HUAWEI TECHNOLOGIES CO., LTD., Shenzhen, Guangdong 518129 (CN)
(72) Inventor: LI, Mengyuan, Shenzhen, Guangdong 518129 (CN); WANG, Jian, Shenzhen, Guangdong 518129 (CN); LI, Rong, Shenzhen, Guangdong 518129 (CN)
(74) Representative: Huawei European IPR
(86) International application number: PCT/CN2024/120278
(87) International publication number: WO 2025/175756

(57) **Abstract**

A communication method and a related device are provided. In the method, a first communication apparatus processes a first communication parameter based on a second neural network model to obtain a second communication parameter, and then processes a signal based on the second communication parameter. The first communication parameter is obtained based on a first neural network model. In other words, the first communication apparatus may process a communication signal based on a communication parameter obtained through neural network processing. In this way, computational power of the communication apparatus can be used for neural network processing, while a communication parameter can be quickly determined by using a neural network model, thereby reducing communication delay. In some implementations, the second neural network model may further process a communication parameter by performing optimization processing, to improve communication performance for communication carried out based on the second communication parameter.

## Description

This application claims priority to Chinese Patent Application No. 202410205343.5, filed with the China National Intellectual Property Administration on February 23, 2024 and entitled "COMMUNICATION METHOD AND RELATED DEVICE", which is incorporated herein by reference in its entirety.

### TECHNICAL FIELD

This application relates to the field of wireless technologies, and in particular, to a communication method and a related device.

### BACKGROUND

Wireless communication may be transmission communication performed between two or more communication nodes without propagation relying on conductors or cables. The communication nodes usually include a network device and a terminal device.

Currently, in a wireless communication system, a communication node usually has signal receiving and sending capabilities and a computing capability. A network device having a computing capability is used as an example. The computing capability of the network device mainly provides computational power support for signal receiving and sending capabilities (for example, performing sending processing and receiving processing on a signal), to implement communication between the network device and another communication node.

However, in a communication network, in addition to providing computational power support for the foregoing communication task based on the computing capability of the communication node, the communication node may further have spare computing capabilities. Therefore, how to use these computing capabilities is an urgent technical problem.

### SUMMARY

This application provides a communication method and a related device. This application enables computational power of a communication apparatus to be used for neural network processing, while allowing a communication parameter to be quickly determined by a neural network model, thereby reducing communication delay.

A first aspect of this application provides a communication method. The method is applied to a first communication apparatus. The first communication apparatus may be a communication device (for example, a terminal device or a network device), or the first communication apparatus may be a part of components (for example, a processor, a chip, or a chip system) in a communication device, or the first communication apparatus may be a logical module or software that can implement all or a part of functions of a communication device. In the method, the first communication apparatus processes collected first information based on a first neural network model to obtain a first communication parameter; the first communication apparatus processes the first communication parameter based on a second neural network model to obtain a second communication parameter; and the first communication apparatus processes a signal based on the second communication parameter.

Based on the foregoing technical solution, the first communication apparatus processes the first communication parameter based on the second neural network model to obtain the second communication parameter, and then processes the signal based on the second communication parameter. The first communication parameter is obtained based on the first neural network model. In other words, the first communication apparatus may process a communication signal based on a communication parameter obtained through neural network processing. In this way, computational power of the communication apparatus can be used for neural network processing, while a communication parameter can be quickly determined by using a neural network model, thereby reducing communication delay.

In addition, in the foregoing technical solution, the second neural network model can process the first communication parameter output by a first neural network, to obtain the second communication parameter used for signal processing. In comparison with a manner of determining a communication parameter by using a single neural network model, in the foregoing technical solution, the first neural network model may be a model with relatively high generalization, that is, the first communication parameter output by the first neural network model may be applied to a plurality of communication tasks; and the second neural network model may further process a communication parameter and can perform optimization processing on the communication parameter, to improve communication performance of performing communication based on the second communication parameter.

In this application, the neural network model may be replaced with another term, for example, a model, an artificial intelligence (artificial intelligence, AI) model, an AI network, an AI neural network model, a neural network, a machine learning model, or an AI processing model.

It should be understood that, in a process in which a neural network model (for example, the first neural network model or a third neural network model described below) processes collected information to obtain a communication parameter, the processing is denoted as first processing. The first processing may be understood as one or more of prediction, inference, estimation, evaluation, decision-making, and pre-estimation. Optionally, the neural network model may be a large wireless model, a large pre-trained wireless model, or the like with a relatively large model parameter scale.

It should be understood that, in a process in which a neural network model (for example, the second neural network model or a fourth neural network model described below) processes one communication parameter to obtain another communication parameter, the processing is denoted as second processing. The second processing may be understood as one or more of correction, modification, adjustment, optimization, updating, calibration, and fine-tuning. Optionally, the neural network model may be a correction model, a fine-tuning model, an additional layer model, or the like with a relatively small model parameter scale.

It should be noted that, in a process in which the first communication apparatus processes a signal based on a communication parameter, the first communication apparatus may process a received signal based on the communication parameter, and/or the first communication apparatus processes a to-be-sent signal based on the communication parameter.

In a possible implementation of the first aspect, before the first communication apparatus processes the collected first information based on the first neural network model to obtain the first communication parameter, the method further includes: the first communication apparatus performs communication based on a third communication parameter, where the third communication parameter is determined based on a communication signal received and/or sent by the first communication apparatus. The third communication parameter and the fourth communication parameter are used to process a third neural network model to obtain the first neural network model, and the fourth communication parameter is a communication parameter obtained by processing collected second information based on the third neural network model.

Based on the foregoing technical solution, before the first communication apparatus determines the first communication parameter based on the first neural network model, the first communication apparatus may further process the third neural network model based on the third communication parameter in a process of performing communication based on the third communication parameter to obtain the first neural network model. Because the third communication parameter is determined based on the communication signal received and/or sent by the first communication apparatus, the third communication parameter can reflect an actual communication environment. In this manner, performance of the first neural network model obtained based on the third communication parameter can be improved, and the first communication apparatus can also reuse a communication signal to implement model processing. A specific sample in a model processing process does not need to be collected, thereby reducing overheads.

It should be understood that in a process of processing one neural network model to obtain another neural network model (for example, processing the third neural network model to obtain the first neural network model, or processing the fourth neural network model described below to obtain the second neural network model), the processing is denoted as third processing. The third processing may be understood as one or more of training, iteration, optimization, fine-tuning, updating, tuning, and improvement.

Optionally, the third communication parameter and the fourth communication parameter being used to process the third neural network model to obtain the first neural network model may include that the third communication parameter and the fourth communication parameter may be used as inputs of the third neural network model, and the first neural network model is obtained through the third processing; or the third communication parameter and performance of a communication signal processed based on the fourth communication parameter may be used as inputs of the third neural network model, and the first neural network model is obtained through the third processing.

In a possible implementation of the first aspect, before the first communication apparatus processes the first communication parameter based on the second neural network model to obtain the second communication parameter, the method further includes: The first communication apparatus performs communication based on a fifth communication parameter, where the fifth communication parameter is determined based on a communication signal received and/or sent by the first communication apparatus. The fifth communication parameter and the first communication parameter are used to process the fourth neural network model to obtain the second neural network model.

Optionally, the fifth communication parameter and the first communication parameter being used to process the fourth neural network model to obtain the second neural network model may include that the fifth communication parameter and the first communication parameter may be used as inputs of the fourth neural network model, and the second neural network model is obtained through the third processing; or the fifth communication parameter and performance of a communication signal processed based on the first communication parameter may be used as inputs of the fourth neural network model, and the second neural network model is obtained through the third processing.

Based on the foregoing technical solution, before the first communication apparatus determines the second communication parameter based on the second neural network model, the first communication apparatus may further perform update processing on the fourth neural network model based on the fifth communication parameter and the first communication parameter in a process of performing communication based on the fifth communication parameter to obtain the second neural network model. Because the fifth communication parameter is determined based on the communication signal received and/or sent by the first communication apparatus, the fifth communication parameter can reflect an actual communication environment. In this manner, performance of the second neural network model obtained based on the fifth communication parameter can be improved, and the first communication apparatus can also reuse a communication signal to implement a model update. A specific sample in a model update process does not need to be collected, thereby reducing overheads.

Optionally, the third communication parameter and the fifth communication parameter may be the same or partially the same. In this manner, a same communication parameter can be reused to process different neural network models, thereby further reducing overheads.

Optionally, the third communication parameter and the fifth communication parameter are different from each other.

In a possible implementation of the first aspect, the method further includes: the first communication apparatus obtains third information, where the third information indicates communication performance corresponding to the first communication parameter. The first communication apparatus processing the first communication parameter based on the second neural network model to obtain the second communication parameter includes that the first communication apparatus processes the third information and the first communication parameter based on the second neural network model to obtain the second communication parameter.

Based on the foregoing technical solution, the first communication apparatus may further obtain the communication performance of performing communication based on the first communication parameter obtained based on the first neural network model, and the first communication apparatus can process the communication performance and the first communication parameter based on the second neural network model. In this manner, because a determining basis for determining the second communication parameter based on the second neural network model further includes communication performance, the second neural network model can determine a communication parameter based on feedback of the communication performance, to support real-time correction of the communication parameter based on the feedback of the communication performance, thereby improving correction flexibility.

Optionally, the second neural network model includes a first submodel and a second submodel. After the first submodel is used to preprocess the third information to obtain a processing result, the second submodel is used to perform fusion processing on the processing result and the first communication parameter to obtain the second communication parameter.

Optionally, the preprocessing may include one or more of dimension alignment, implicit extraction of information related to a wireless parameter, denoising, normalization, standardization, and the like.

In a possible implementation of the first aspect, the first communication apparatus processes the third information and the first communication parameter based on the second neural network model to obtain the second communication parameter includes: when at least one of the following is satisfied, the first communication apparatus processing the third information and the first communication parameter based on the second neural network model to obtain the second communication parameter includes:
the communication performance corresponding to the first communication parameter is lower than a threshold; and
it is determined that a duration of performing communication based on the first communication parameter is greater than or equal to a preset duration.

Based on the foregoing technical solution, when at least one of the foregoing is satisfied, the first communication apparatus may determine that the communication parameter output by the first neural network model needs to be processed by using the second neural network model. Therefore, the first communication apparatus may trigger processing, based on the second neural network model, the third information and the first communication parameter to obtain the second communication parameter. In the foregoing manner, an event-based trigger manner and a fixed-periodicity-based trigger manner are provided, to improve solution implementation flexibility.

In a possible implementation of the first aspect, the method further includes: when at least one of the following is satisfied, the first communication apparatus processing a signal based on the first communication parameter includes:
the performance corresponding to the first communication parameter is higher than or equal to the threshold; and
it is determined that the duration of performing communication based on the first communication parameter is less than the preset duration.

Based on the foregoing technical solution, when at least one of the foregoing is satisfied, the first communication apparatus may determine that the communication parameter output by the first neural network model does not need to be processed currently by using the second neural network model. Therefore, the first communication apparatus may trigger the first communication apparatus to process a signal based on the first communication parameter without participation of the second neural network model. In the foregoing manner, an event-based trigger manner and a fixed-periodicity-based trigger manner are provided, to improve solution implementation flexibility.

In a possible implementation of the first aspect, after the first communication apparatus processes the signal based on the second communication parameter, the method further includes: the first communication apparatus obtains fourth information, where the fourth information indicates communication performance corresponding to the second communication parameter; and the first communication apparatus performs model update processing on the first neural network model and/or the second neural network model based on the fourth information.

Optionally, the model update processing may be replaced with other model processing, for example, one or more of training, iteration, optimization, fine-tuning, updating, tuning, and improvement.

Based on the foregoing technical solution, the first communication apparatus may further obtain the communication performance of performing communication based on the second communication parameter, and the first communication apparatus can perform model update processing on the first neural network model and/or the second neural network model based on the communication performance. In this manner, because the communication performance indicated by the fourth information may indicate the performance of the first neural network model and/or the performance of the second neural network model, the neural network model can be corrected based on feedback of the communication performance, thereby improving correction flexibility.

In a possible implementation of the first aspect, the first communication apparatus performing model update processing on the first neural network model and/or the second neural network model based on the fourth information includes: when at least one of the following is satisfied, the first communication apparatus performing model update processing on the first neural network model and/or the second neural network model based on the fourth information includes:
a quantity of times that the performance corresponding to the second communication parameter is lower than a threshold reaches a threshold; and
it is determined that a duration of performing communication based on the second communication parameter is greater than or equal to a preset duration.

Based on the foregoing technical solution, when at least one of the foregoing is satisfied, the first communication apparatus may determine that model update processing needs to be performed on the second neural network model and/or the first neural network model. Therefore, the first communication apparatus may trigger, based on the fourth information, model update processing on the first neural network model and/or the second neural network model. In the foregoing manner, an event-based trigger manner and a fixed-periodicity-based trigger manner are provided, to improve solution implementation flexibility.

In a possible implementation of the first aspect, the collected first information and/or the collected second information include/includes at least one of the following: environment information, user information, or task information.

Based on the foregoing technical solution, information collected by the first communication apparatus may include at least one of the foregoing, to improve solution implementation flexibility.

A second aspect of this application provides a communication method. The method is applied to a first communication apparatus. The first communication apparatus may be a communication device (for example, a terminal device or a network device), or the first communication apparatus may be a part of components (for example, a processor, a chip, or a chip system) in a communication device, or the first communication apparatus may be a logical module or software that can implement all or a part of functions of a communication device. In the method, the first communication apparatus performs communication based on a third communication parameter. The third communication parameter is determined based on a communication signal received and/or sent by the first communication apparatus. The third communication parameter and a fourth communication parameter are used to process a third neural network model to obtain a first neural network model. The fourth communication parameter is a communication parameter obtained by processing collected second information based on the third neural network model. The first communication apparatus processes collected first information based on the first neural network model to obtain a first communication parameter. The first communication apparatus processes a signal based on the first communication parameter.

Based on the foregoing technical solution, in a process in which the first communication apparatus performs communication based on the third communication parameter, the first communication apparatus may process the third neural network model based on the third communication parameter to obtain the first neural network model. Because the third communication parameter is determined based on the communication signal received and/or sent by the first communication apparatus, the third communication parameter can reflect an actual communication environment. In this manner, performance of the first neural network model obtained based on the third communication parameter can be improved, and the first communication apparatus can also reuse a communication signal to implement model processing. A specific sample in a model processing process does not need to be collected, thereby reducing overheads.

In a possible implementation of the second aspect, after the first communication apparatus processes the signal based on the first communication parameter, the method further includes: the first communication apparatus obtains fifth information, where the fifth information indicates performance corresponding to the first communication parameter; and the first communication apparatus performs model update processing on the first neural network model based on the fifth information.

Based on the foregoing technical solution, the first communication apparatus may further obtain communication performance of performing communication based on the first communication parameter, and the first communication apparatus can perform model update processing on the first neural network model based on the communication performance. In this manner, because the communication performance indicated by the fifth information may indicate the performance of the first neural network model, the neural network model can be corrected in real time based on feedback of the communication performance, thereby improving correction flexibility.

In a possible implementation of the second aspect, the first communication apparatus performing model update processing on the first neural network model based on the fifth information includes: when at least one of the following is satisfied, the first communication apparatus performing model update processing on the first neural network model based on the fifth information includes:
the performance corresponding to the first communication parameter is lower than a threshold; and
it is determined that a duration of performing communication based on the first communication parameter is greater than or equal to a preset duration.

Based on the foregoing technical solution, when at least one of the foregoing is satisfied, the first communication apparatus may determine that model update processing needs to be performed on the first neural network model. Therefore, the first communication apparatus may trigger, based on the fifth information, model update processing on the first neural network model. In the foregoing manner, an event-based trigger manner and a fixed-periodicity-based trigger manner are provided, to improve solution implementation flexibility.

A third aspect of this application provides a communication apparatus. The apparatus is a first communication apparatus. The apparatus includes a transceiver unit and a processing unit. The processing unit is configured to process collected first information based on a first neural network model to obtain a first communication parameter. The processing unit is further configured to process the first communication parameter based on a second neural network model to obtain a second communication parameter. The transceiver unit is configured to process a signal based on the second communication parameter.

In the third aspect of this application, the component modules of the communication apparatus may be further configured to: perform the steps performed in the possible implementations of the first aspect, and achieve corresponding technical effects. For details, refer to the first aspect. Details are not described herein again.

A fourth aspect of this application provides a communication apparatus. The apparatus is a first communication apparatus. The apparatus includes a transceiver unit and a processing unit. The processing unit is configured to perform communication based on a third communication parameter. The third communication parameter is determined based on a communication signal received and/or sent by the first communication apparatus. The third communication parameter and a fourth communication parameter are used to process a third neural network model to obtain a first neural network model. The fourth communication parameter is a communication parameter obtained by processing collected second information based on the third neural network model. The processing unit is further configured to process the collected first information based on the first neural network model to obtain a first communication parameter. The transceiver unit is configured to process a signal based on the first communication parameter.

In the fourth aspect of this application, the component modules of the communication apparatus may be further configured to: perform the steps performed in the possible implementations of the second aspect, and achieve corresponding technical effects. For details, refer to the second aspect. Details are not described herein again.

A fifth aspect of this application provides a communication apparatus, including at least one processor. The at least one processor is coupled to a memory. The memory is configured to store a program or instructions. The at least one processor is configured to execute the program or the instructions, to enable the apparatus to implement the method according to any possible implementation of the first aspect or the second aspect.

A sixth aspect of this application provides a communication apparatus, including at least one logic circuit and an input/output interface. The logic circuit is configured to perform the method according to any possible implementation of the first aspect or the second aspect.

A seventh aspect of this application provides a communication system. The communication system includes the foregoing first communication apparatus.

Optionally, the communication system further includes another communication apparatus communicating with the first communication apparatus.

An eighth aspect of this application provides a computer-readable storage medium. The storage medium is configured to store one or more computer-executable instructions. When the computer-executable instructions are executed by a processor, the processor performs the method according to any possible implementation of the first aspect or the second aspect.

A ninth aspect of this application provides a computer program product (or referred to as a computer program). When a computer program in the computer program product is executed by a processor, the processor performs the method according to any possible implementation of the first aspect or the second aspect.

A tenth aspect of this application provides a chip or a chip system. The chip or the chip system includes at least one processor, configured to support a communication apparatus in implementing the method according to any one possible implementation of the first aspect or the second aspect.

In a possible design, the chip or the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design manner in the third aspect to the tenth aspect, refer to technical effects brought by different design manners in the first aspect or the second aspect. Details are not described herein again.

### BRIEF DESCRIPTION OF DRAWINGS

FIG. 1a to FIG. 1c are diagrams of communication systems according to this application;
FIG. 2a to FIG. 2e are diagrams of an AI processing process according to this application;
FIG. 3 is a diagram of interaction of a communication method according to this application;
FIG. 4a to FIG. 4f are diagrams of model processing according to this application;
FIG. 5 is a diagram of interaction of a communication method according to this application;
FIG. 6 is a diagram of model processing according to this application; and
FIG. 7 to FIG. 11 are diagrams of communication apparatuses according to this application.

### DESCRIPTION OF EMBODIMENTS

First, some terms in embodiments of this application are described for ease of understanding by a person skilled in the art.
(1) A terminal device may be a wireless terminal device that can receive scheduling and indication information of a network device. The wireless terminal device may be a device providing voice and/or data connectivity for a user, a handheld device having a wireless connection function, or another processing device connected to a wireless modem.

The terminal device may communicate with one or more core networks or the internet through a radio access network (radio access network, RAN). The terminal device may be a mobile terminal device such as a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges voice and/or data with the radio access network. For example, the terminal device may be a device like a personal communication service (personal communication service, PCS) phone, a cordless telephone set, a session initiation protocol (session initiation protocol, SIP) phone, a wireless local loop (wireless local loop, WLL) station, a personal digital assistant (personal digital assistant, PDA), a tablet computer (tablet or pad), or a computer with wireless transmission and reception functions. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

The terminal may alternatively be an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like.

In addition, the terminal device may alternatively be a terminal device in a communication system (for example, a 5G Advanced communication system or a 6th generation (6th generation, 6G) communication system) evolved after a 5th generation (5th generation, 5G) communication system, a terminal device in a future evolved public land mobile network (public land mobile network, PLMN), or the like. For example, a 5G Advanced network or a 6G network may further extend a form and a function of a 5G communication terminal, and a 6G terminal includes but is not limited to a vehicle, a cellular network terminal (integrating a function of a satellite terminal), an uncrewed aerial vehicle, and an internet of things (internet of things, IoT) device.

In embodiments of this application, the terminal device may further obtain an artificial intelligence (artificial intelligence, AI) service provided by the network device. Optionally, the terminal device may further have an AI processing capability.

(2) A network device may be a device in a wireless network. For example, the network device may be a RAN node (or device) connecting a terminal device to the wireless network, and may also be referred to as a base station. Currently, some examples of the RAN device are a base station (base station), an evolved NodeB (evolved NodeB, eNodeB), a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), a wireless fidelity (wireless fidelity, Wi-Fi) access point (access point, AP), and the like. In addition, in a network structure, the network device may include a central unit (central unit, CU) node, a distributed unit (distributed unit, DU) node, or a RAN device including a CU node and a DU node.

Optionally, the RAN node may alternatively be a macro base station, a micro base station, an indoor base station, a relay node, or a donor node, or may be a radio controller in a cloud radio access network (cloud radio access network, CRAN) scenario. The RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU).

In another possible scenario, a plurality of RAN nodes coordinate to assist the terminal in implementing radio access, and different RAN nodes each implement a part of functions of a base station. For example, the RAN node may be a CU, a DU, a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), a radio head (radio head, RH), or a remote radio head (remote radio head, RRH).

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Communication between an access network device and a terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1.

**Table 1**

| ORAN network element | 3GPP protocol layer function |
|---|---|
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

The network device may be another apparatus that provides a wireless communication function to the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next generation network of the 5G network.

In embodiments of this application, the network device may alternatively be a network node having an AI capability, and may provide an AI service for a terminal or another network device, for example, may be an AI node, a computational power node, a RAN node having an AI capability, or a core network element having an AI capability on a network side (an access network or a core network).

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

(3) Configuration and preconfiguration: In this application, both the configuration and the preconfiguration are used. The configuration means that a network device/server sends configuration information of some parameters or values of parameters to a terminal by using a message or signaling, so that the terminal determines, based on the values or the information, a communication parameter or a resource used for transmission. Similar to the configuration, the preconfiguration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

(4) Terms "system" and "network" in embodiments of this application may be used interchangeably. "A plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, but are not used to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It can be understood that necessary processing, for example, encoding or modulation, may be performed on information between a source end that sends the information and a destination end, but the destination end can understand valid information from the source end. Similar descriptions in this application may be understood similarly, and details are not described again.

(6) In embodiments of this application, "indication" may include a direct indication and an indirect indication, or may include an explicit indication and an implicit indication. Information indicated by specific information (for example, indication information in the following descriptions) is referred to as to-be-indicated information. In this case, during specific implementation, the to-be-indicated information may be indicated in a plurality of manners, for example, but not limited to: the to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and a remaining part of the to-be-indicated information is known or pre-agreed upon. For example, specific information may be indicated by an arrangement sequence of a plurality of pieces of information that is pre-agreed upon (for example, predefined in a protocol), to reduce indication overheads to some extent. A specific indication manner is not limited in this application. It can be understood that, for a sending party of the indication information, the indication information may indicate the to-be-indicated information, and for a receiving party of the indication information, the indication information may be used to determine the to-be-indicated information.

In this application, unless otherwise specified, for same or similar parts of embodiments, reference may be made to each other. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

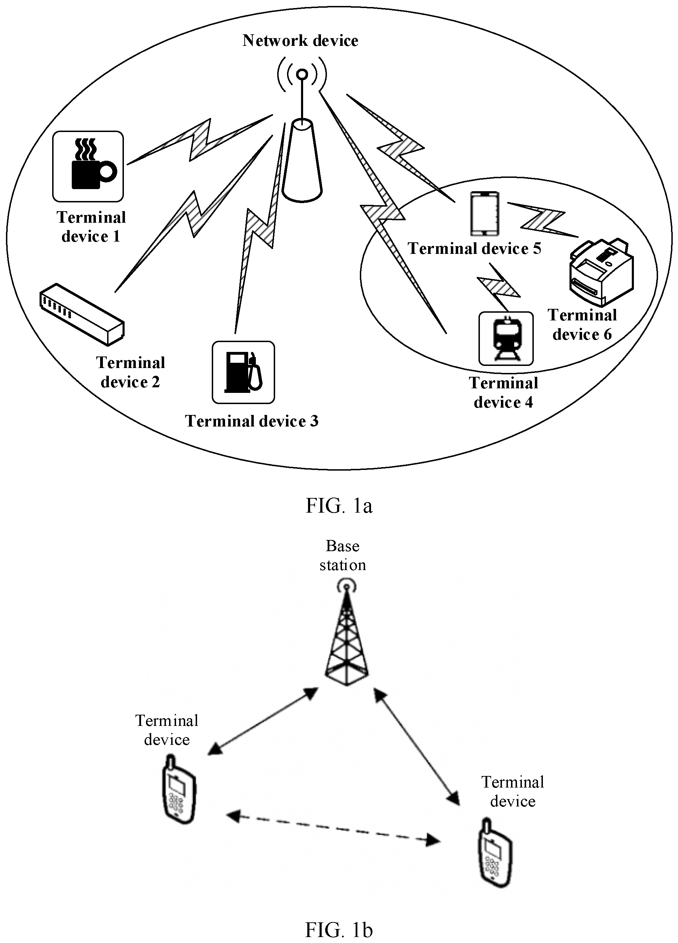

FIG. 1a is a diagram of a communication system according to this application. FIG. 1a shows an example of one network device and six terminal devices. The six terminal devices are respectively a terminal device 1, a terminal device 2, a terminal device 3, a terminal device 4, a terminal device 5, and a terminal device 6. In the example shown in FIG. 1a, an example in which the terminal device 1 is a smart teacup, the terminal device 2 is a smart air conditioner, the terminal device 3 is a smart fuel dispenser, the terminal device 4 is a means of transportation, the terminal device 5 is a mobile phone, and the terminal device 6 is a printer is used for description.

As shown in FIG. 1a, an AI configuration information sending entity may be the network device. AI configuration information receiving entities may be the terminal device 1 to the terminal device 6. In this case, the network device and the terminal device 1 to the terminal device 6 form a communication system. In the communication system, the terminal device 1 to the terminal device 6 may send data to the network device, and the network device needs to receive the data sent by the terminal device 1 to the terminal device 6. Besides, the network device may send configuration information to the terminal device 1 to the terminal device 6.

For example, in FIG. 1a, the terminal device 4 to the terminal device 6 may also form a communication system. The terminal device 5 serves as a network device, that is, an AI configuration information sending entity. The terminal device 4 and the terminal device 6 serve as terminal devices, that is, AI configuration information receiving entities. For example, in an internet of vehicles system, the terminal device 5 sends AI configuration information separately to the terminal device 4 and the terminal device 6, and receives data sent by the terminal device 4 and the terminal device 6; and correspondingly, the terminal device 4 and the terminal device 6 receive the AI configuration information sent by the terminal device 5, and send the data to the terminal device 5.

The communication system shown in FIG. 1a is used as an example. In addition to a communication-related service, an AI-related service may be performed between different devices (including between network devices, between a network device and a terminal device, and/or between terminal devices).

As shown in FIG. 1b, an example in which the network device is a base station is used. A communication-related service and an AI-related service may be performed between the base station and one or more terminal devices, and a communication-related service and an AI-related service may also be performed between different terminal devices.

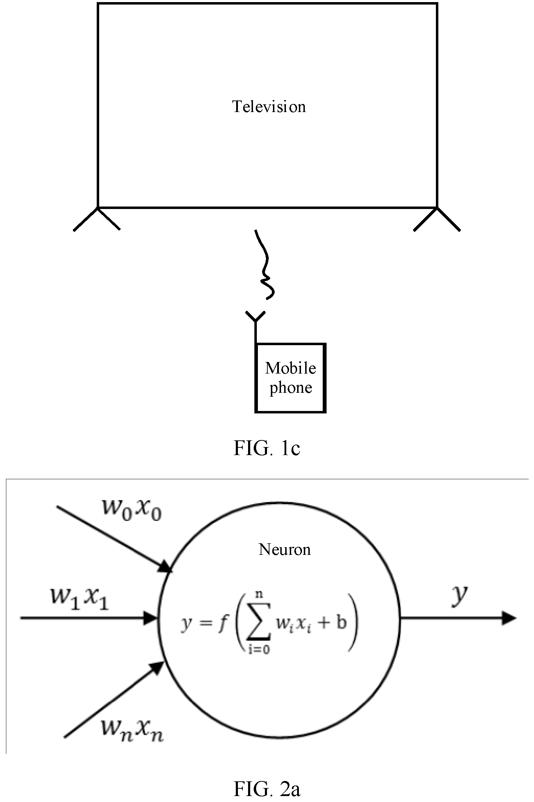

As shown in FIG. 1c, an example in which terminal devices include a television and a mobile phone is used. A communication-related service and an AI-related service may also be performed between the television and the mobile phone.

The technical solutions provided in this application may be applied to a wireless communication system (for example, the system shown in FIG. 1a, FIG. 1b, or FIG. 1c). For example, an AI network element may be introduced to the communication system provided in this application to implement a part or all of AI-related operations. The AI network element may also be referred to as an AI node, an AI device, an AI entity, an AI module, an AI model, an AI unit, or the like. The AI network element may be built in a network element in a communication system. For example, the AI network element may be an AI module built in the access network device, the core network device, a cloud server, or an operation, administration, and maintenance (operation, administration, and maintenance, OAM), to implement an AI-related function. The OAM may serve as a network management system of the core network device and/or a network management system of the access network device. Alternatively, the AI network element may be an independently disposed network element in a communication system. Optionally, the terminal or the chip built in the terminal may alternatively include the AI entity, configured to implement the AI-related function.

The following briefly describes AI that may be used in this application.

AI enables machines to have human intelligence, for example, enables machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result (or a prediction result).

Machine learning may include supervised learning, unsupervised learning, and reinforcement learning. The unsupervised learning may also be referred to as non-supervised learning.

In terms of the supervised learning, based on collected sample values and sample labels, a mapping relationship between the sample values and the sample labels is learned by using a machine learning algorithm, and the learned mapping relationship is expressed by using an AI model. A process of training a machine learning model is a process of learning the mapping relationship. In the training process, a sample value is input into the model to obtain a predicted value of the model, and a model parameter is optimized by calculating an error between the predicted value of the model and a sample label (ideal value). After the mapping relationship is learned, a new sample label may be predicted by using the learned mapping. The mapping relationship learned through the supervised learning may include linear mapping or non-linear mapping. Learning tasks may be classified into a classification task and a regression task based on a type of a label.

In terms of unsupervised learning, an internal pattern of a sample is explored autonomously by using an algorithm based on a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

The reinforcement learning is different from the supervised learning, and is an algorithm that learns a policy of resolving problems by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. An objective of the reinforcement learning is also to learn a mapping relationship between an environment status and a better (for example, an optimal) decision action. However, a label of "correct action" cannot be obtained in advance. Therefore, a network cannot be optimized by calculating an error between an action and the "correct action". Reinforcement learning training is implemented through iterative interaction with the environment.

A neural network (neural network, NN) is a specific model in a machine learning technology. According to a universal approximation theorem, the neural network can theoretically approximate any continuous function, so that the neural network has a capability of learning any mapping. In a conventional communication system, rich expertise is required to design a communication module. However, in a neural network-based deep learning communication system, an implicit pattern structure may be automatically discovered from a large quantity of datasets and a mapping relationship between data may be established to obtain performance better than that of a conventional modeling method.

An idea of the neural network comes from a neuron structure of brain tissue. For example, each neuron performs a weighted summation operation on input values of the neuron, and outputs an operation result through an activation function.

FIG. 2a is a diagram of a neuron structure. It is assumed that inputs of a neuron are *x* = [*x*₀, *x*₁, ... , *xₙ*], and weights corresponding to the inputs are respectively *w* = [w, *w*₁, ... , *wₙ*], where n is a positive integer, and *wᵢ* and *xᵢ* may be in various possible types such as a decimal, an integer (for example, 0, a positive integer, or a negative integer), or a complex number. *wᵢ* is a weight of *xᵢ*, and is used to weight *xᵢ*. A bias for performing weighted summation on the input values based on the weights is, for example, b. There may be a plurality of forms of the activation function. For example, if an activation function of a neuron is y = *f*(*z*) = max (0, *z*), an output of the neuron is $y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right)$. For another example, if an activation function of a neuron is y = *f*(*z*) = *z*, an output of the neuron is $y = f \left({\sum }_{i = 0}^{i = n} {w}_{i} ∗ {x}_{i} + b\right) = {\sum }_{i = 0}^{i = n} {w}_{i} ∗ {x}_{i} + b$. b may be of various possible types such as a decimal, an integer (for example, 0, a positive integer, or a negative integer), or a complex number. Activation functions of different neurons in the neural network may be the same or different.

In addition, the neural network usually includes a plurality of layers, and each layer may include one or more neurons. A depth and/or a width of the neural network is increased, so that an expression capability of the neural network can be improved, and a more powerful information extraction and abstraction modeling capability can be provided for a complex system. The depth of the neural network may be a quantity of layers included in the neural network, and a quantity of neurons included at each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. The input layer of the neural network performs neuron processing on received input information, and transfers a processing result to an intermediate hidden layer. The hidden layer performs calculation on the received processing result to obtain a calculation result. The hidden layer transfers the calculation result to the output layer or a next adjacent hidden layer. Finally, the output layer obtains an output result of the neural network. A neural network may include one hidden layer, or include a plurality of hidden layers that are sequentially connected. This is not limited.

The neural network is, for example, a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

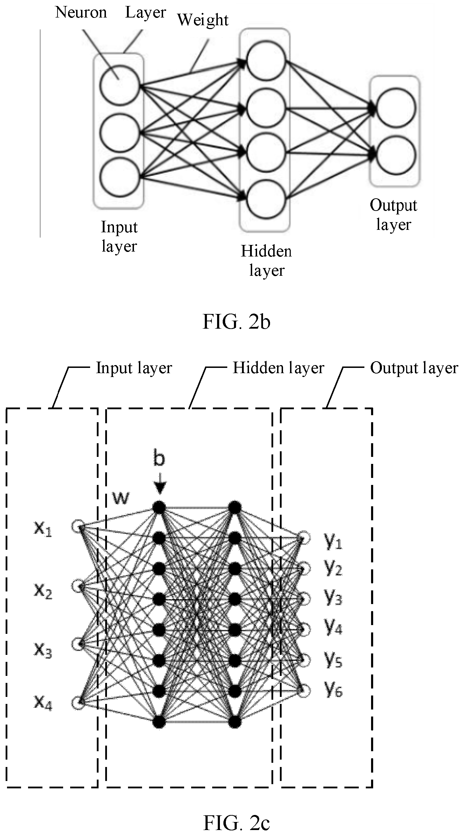

FIG. 2b is a diagram of an FNN network. A feature of the FNN network is that neurons at adjacent layers are fully connected to each other. Due to this feature, the FNN usually needs a large amount of storage space, resulting in high computational complexity.

The CNN is a neural network dedicated to processing data of a similar grid structure. For example, both time series data (for example, time-axis discrete sampling) and image data (for example, two-dimensional discrete sampling) may be considered as the data of the similar grid structure. The CNN performs a convolution operation by capturing partial information through a window with a fixed size, instead of performing an operation based on all input information at one time. This greatly reduces the calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

In the foregoing model training process of machine learning, a loss function may be defined. The loss function describes a gap or a difference between an output value of the model and an ideal target value. The loss function may be expressed in a plurality of forms, and a specific form of the loss function is not limited. The model training process may be considered as the following process: A part or all of parameters of the model are adjusted, so that a value of the loss function is less than a threshold or meets a target requirement.

The model may also be referred to as an AI model, a rule, another name, or the like. The AI model may be considered as a specific method for implementing an AI function. The AI model represents a mapping relationship or a function between an input and an output of the model. The AI function may include one or more of the following: data collection, model training (or model learning), model information release, model inference (or referred to as model inference, inference, prediction, or the like), model monitoring or model verification, inference result release, or the like. The AI function may also be referred to as an AI (AI-related) operation or an AI-related function.

The following describes an example of an implementation process of a fully connected neural network with reference to the accompanying drawings. The fully connected neural network is also referred to as a multilayer perceptron (multilayer perceptron, MLP).

As shown in FIG. 2c, an MLP includes one input layer (left side), one output layer (right side), and a plurality of hidden layers (middle). Each layer of the MLP includes several nodes, which are referred to as neurons. Neurons at two adjacent layers are connected to each other in pairs.

Optionally, considering neurons at two adjacent layers, an output h of a neuron at a given layer is obtained by applying an activation function to a weighted sum of all neurons x at the immediately preceding layer connected to the neuron at the given layer, and may be expressed as: $h = f \left(wx+b\right) .$

Herein, w is a weight matrix, b is a bias vector, and f is the activation function.

Further, optionally, the output of the neural network may be recursively expressed as: $y = {f}_{n} \left({w}_{n}{f}_{n - 1}\left(…\right)+{b}_{n}\right) .$

Herein, n is an index of a neural network layer, n is greater than or equal to 1, n is less than or equal to N, and N is a total quantity of layers of the neural network.

In other words, the neural network may be understood as a mapping relationship from an input dataset to an output dataset. The neural network is usually initialized randomly, and a process of obtaining the mapping relationship from random w and b based on existing data is referred to as training of the neural network.

Optionally, a specific training manner is to evaluate an output result of the neural network by using a loss function (loss function).

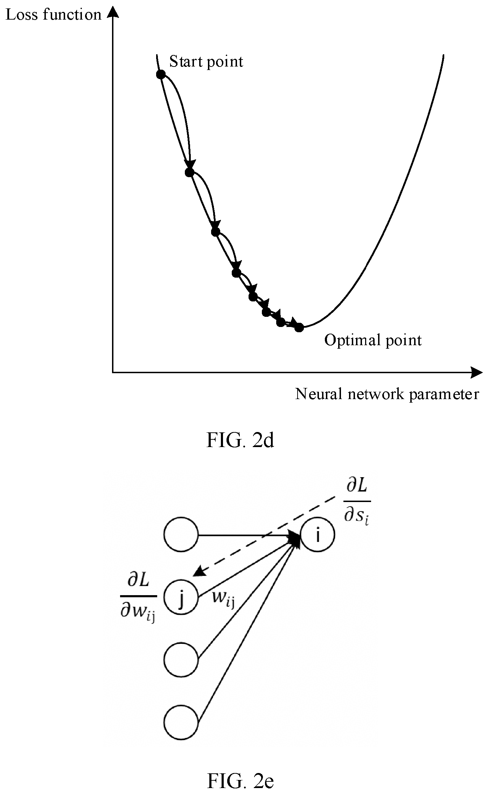

As shown in FIG. 2d, an error may be backpropagated, and neural network parameters (including w and b) can be iteratively optimized by using a gradient descent method until a loss function reaches a minimum value, that is, "a better point (for example, the optimal point)" in FIG. 2d. It may be understood that a neural network parameter corresponding to "the better point (for example, the optimal point)" in FIG. 2d may be used as a neural network parameter in trained AI model information.

Further optionally, a gradient descent process may be expressed as: $θ ← θ - η \frac{\partial L}{\partial θ} .$

Herein, ***θ*** is a to-be-optimized parameter (including **w** and **b**), L is a loss function, η is a learning rate to control a gradient descent step size, ∂ represents a derivative operation, and $\frac{\partial L}{\partial θ}$ denotes the derivative of *L* with respect to ***θ***.

Further, optionally, a backpropagation process uses a chain rule for finding a partial derivative.

As shown in FIG. 2e, a gradient of a parameter at a given layer may be obtained by recursive calculation of a gradient of a parameter at the immediately subsequent layer, and may be expressed as: $\frac{\partial L}{\partial {w}_{i j}} = \frac{\partial L}{\partial {s}_{i}} \frac{\partial {s}_{i}}{\partial {w}_{ij}} .$

Herein, wᵢⱼ is a weight of connection between a node j and a node i, and sᵢ is an input weighted sum on the node i.

The technical solutions provided in this application may be applied to a wireless communication system (for example, the system shown in FIG. 1a, FIG. 1b, or FIG. 1c). In the wireless communication system, a communication node usually has signal receiving and sending capabilities and a computing capability. A network device having a computing capability is used as an example. The computing capability of the network device mainly provides computational power support for signal receiving and sending capabilities (for example, performing sending processing and receiving processing on a signal), to implement a communication task between the network device and another communication node.

However, in a communication network, in addition to providing computational power support for the foregoing communication task based on the computing capability of the communication node, the communication node may further have spare computing capabilities. Therefore, how to use these computing capabilities is an urgent technical problem.

To resolve the foregoing problem, this application provides a communication method and a related device. The following provides detailed descriptions with reference to the accompanying drawings.

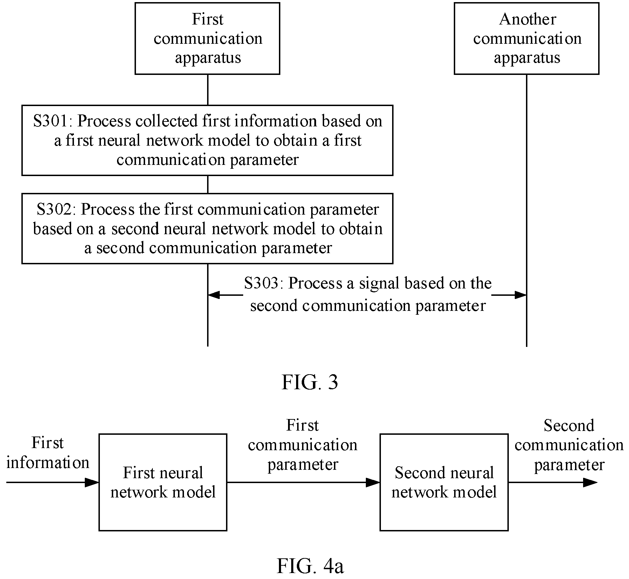

FIG. 3 is a diagram of an implementation of a communication method according to this application. The method includes the following steps.

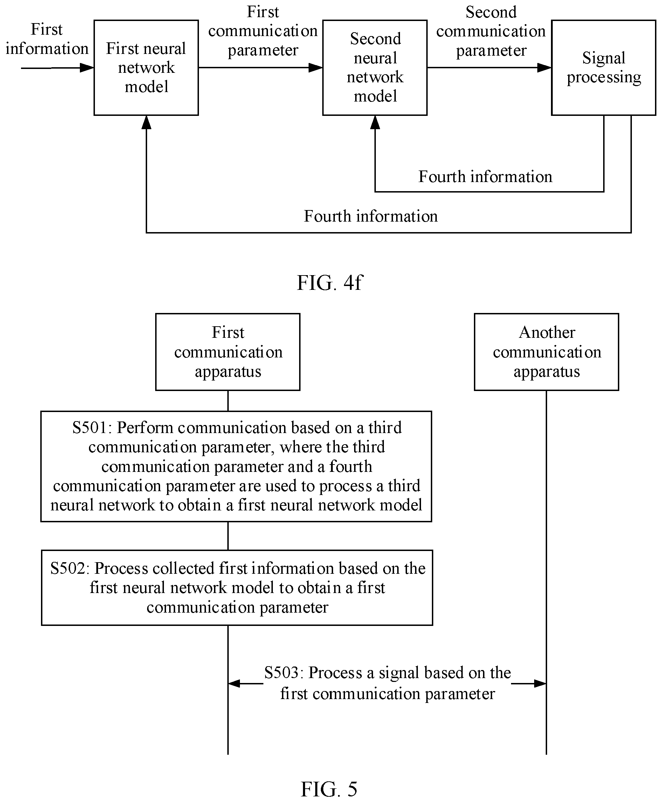

It should be noted that in FIG. 3 and FIG. 5 below, the method is illustrated by using an example in which a first communication apparatus and another communication apparatus are used as execution bodies of the interaction. However, the execution bodies of the interaction example are not limited in this application. For example, the communication apparatus may be a communication device (for example, a terminal device or a network device), or a chip, a baseband (baseband) chip, a modem (modem) chip, a system on chip (system on chip, SoC) chip including a modem core, a system in package (system in package, SIP) chip, a communication module, a chip system, a processor, a logic module, or software in a communication device.

S301: The first communication apparatus processes collected first information based on a first neural network model to obtain a first communication parameter.

S302: The first communication apparatus processes the first communication parameter based on a second neural network model to obtain a second communication parameter.

S303: The first communication apparatus processes a signal based on the second communication parameter.

In this application, the neural network model may be replaced with another term, for example, a model, an AI model, an AI network, an AI neural network model, a neural network, a machine learning model, or an AI processing model.

It should be understood that, in a process in which a neural network model (for example, the first neural network model or a third neural network model described below) processes collected information to obtain a communication parameter, the processing is denoted as first processing. The first processing may include one or more of prediction, inference, estimation, evaluation, decision-making, and pre-estimation. Optionally, the neural network model may be one or more of a large wireless model, a large pre-trained wireless model, or the like with a relatively large model parameter scale.

It should be understood that, in a process in which a neural network model (for example, the second neural network model or a fourth neural network model described below) processes one communication parameter to obtain another communication parameter, the processing is denoted as second processing. The second processing may be understood as one or more of correction, modification, adjustment, optimization, updating, calibration, and fine-tuning. Optionally, the neural network model may be one or more of a correction model, a fine-tuning model, an additional layer model, or the like with a relatively small model parameter scale.

It should be noted that, in S303, in a process in which the first communication apparatus processes a signal based on a communication parameter, the first communication apparatus may process a received signal based on the communication parameter, and/or the first communication apparatus processes a to-be-sent signal based on the communication parameter.

For example, FIG. 4a is a diagram of implementation of the first neural network model and the second neural network model in the method shown in FIG. 3.

In FIG. 4a, an input of the first neural network model may include first information, and an output of the first neural network model may include a first communication parameter.

In FIG. 4a, an input of the second neural network model may include the first communication parameter, and an output of the second neural network model may include a second communication parameter.

It should be noted that the communication parameter (for example, one or more of the first communication parameter to a fifth communication parameter) in embodiments of this application may include a parameter used in a communication process, for example, a bit rate of encoding and/or decoding, a sequence used for scrambling and/or descrambling, a modulation order and/or a demodulation order, a channel parameter, a communication rate, and a bit error rate.

Optionally, in a process in which one communication parameter is processed by using a neural network model to obtain another communication parameter (for example, the first communication parameter is processed by using the second neural network model to obtain the second communication parameter), a parameter type of the communication parameter is the same as a parameter type of the another communication parameter. For example, if a parameter type of a specific parameter included in the first communication parameter is an encoding bit rate, the second communication parameter also includes a parameter whose parameter type is an encoding bit rate. For another example, if a parameter type of a specific parameter included in the first communication parameter is a modulation order, the second communication parameter also includes a parameter whose parameter type is a modulation order.

Optionally, a parameter value of the communication parameter may be the same as or different from a parameter value of the another communication parameter.

Based on the technical solution shown in FIG. 3, the first communication apparatus processes the first communication parameter based on the second neural network model in S302 to obtain the second communication parameter, and then processes the signal based on the second communication parameter in S303. The first communication parameter is obtained based on the first neural network model. In other words, the first communication apparatus may process a communication signal based on a communication parameter obtained through neural network processing. In this way, computational power of the communication apparatus can be used for neural network processing, while a communication parameter can be quickly determined by using a neural network model, thereby reducing communication delay.

In addition, in the foregoing technical solution, the second neural network model can process the first communication parameter output by a first neural network to obtain the second communication parameter used for signal processing. In comparison with a manner of determining a communication parameter by using a single neural network model, in the foregoing technical solution, the first neural network model may be a model with relatively high generalization, that is, the first communication parameter output by the first neural network model may be applied to a plurality of communication tasks; and the second neural network model may further process a communication parameter and can perform optimization processing on the communication parameter, to improve communication performance of performing communication based on the second communication parameter.

In a possible implementation, information collected by the first communication apparatus (for example, the first information collected in S301, and/or following mentioned second information collected by the first communication apparatus) includes at least one of the following: environment information, user information, or task information. Therefore, the information collected by the first communication apparatus may include at least one of the foregoing, to improve solution implementation flexibility.

In an implementation example, for the environment information included in the information collected by the first communication apparatus, the environment information may include information about a communication environment in which the first communication apparatus is located. For example, the environment information may include one or more of the following: indication information indicating whether the environment is an indoor environment, indication information indicating whether the environment is an outdoor environment, environment perception information (for example, one or more of temperature information and humidity information), and geographical environment information.

In an implementation example, the user information included in the information collected by the first communication apparatus may include information about a user corresponding to the first communication apparatus. For example, the user information may include one or more of the following: identity information, service subscription information, moving speed information, and device hardware information.

In an implementation example, the task information included in the information collected by the first communication apparatus may include information about a task executed by the first communication apparatus. The task may include a communication task (for example, one or more of a data transmission task and a signal collection task), an AI task (for example, one or more of a channel information prediction task and a path loss prediction task), and the like. For example, the task information may include one or more of the following: a task identifier and a task-related parameter.

In a possible implementation, before the first communication apparatus processes the collected first information based on the first neural network model to obtain the first communication parameter, the method further includes: the first communication apparatus performs communication based on a third communication parameter, where the third communication parameter is determined based on a communication signal received and/or sent by the first communication apparatus. The third communication parameter and the fourth communication parameter are used to process a third neural network model to obtain the first neural network model, and the fourth communication parameter is a communication parameter obtained by processing collected second information based on the third neural network model.

Specifically, before the first communication apparatus determines the first communication parameter based on the first neural network model, the first communication apparatus may further process the third neural network model based on the third communication parameter in a process of performing communication based on the third communication parameter to obtain the first neural network model. Because the third communication parameter is determined based on the communication signal received and/or sent by the first communication apparatus, the third communication parameter can reflect an actual communication environment. In this manner, performance of the first neural network model obtained based on the third communication parameter can be improved, and the first communication apparatus can also reuse a communication signal to implement model processing. A specific sample in a model processing process does not need to be collected, thereby reducing overheads.

It should be understood that in a process of processing one neural network model to obtain another neural network model (for example, processing the third neural network model to obtain the first neural network model, or processing the fourth neural network model described below to obtain the second neural network model), the processing is denoted as third processing. The third processing may be understood as one or more of training, iteration, optimization, fine-tuning, update, tuning, and improvement.

Optionally, the third communication parameter and the fourth communication parameter being used to process the third neural network model to obtain the first neural network model may include that the third communication parameter and the fourth communication parameter may be used as inputs of the third neural network model, and the first neural network model is obtained through the third processing; or the third communication parameter and performance of a communication signal processed based on the fourth communication parameter may be used as inputs of the third neural network model, and the first neural network model is obtained through the third processing.

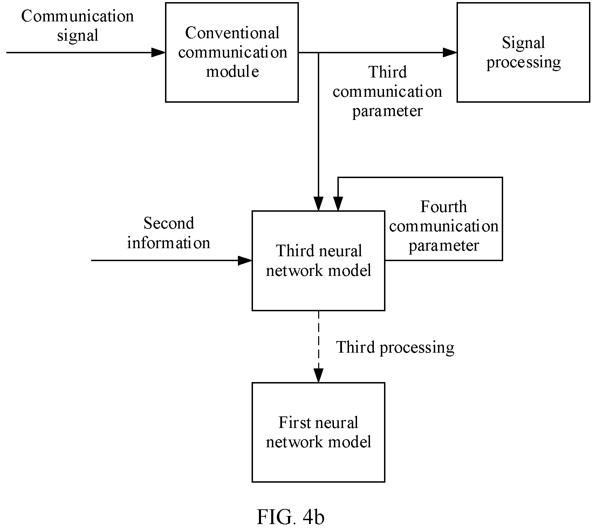

For example, FIG. 4b is a diagram of the third neural network model in the foregoing process.

In FIG. 4b, the first communication apparatus may process a received or sent communication signal based on a conventional communication module to obtain the third communication parameter. In addition, the third communication parameter may be used for signal processing, that is, the first communication apparatus may receive a signal or send a signal based on the third communication parameter.

In FIG. 4b, for the third neural network model, one processing process includes: an input of the third neural network model may include second information, an output of the third neural network model may include a fourth communication parameter, and the processing process may be similar to the first processing described above. In addition, for the third neural network model, another processing process includes: the third communication parameter and the fourth communication parameter may be used as inputs of the third neural network model (or performance of a communication signal processed based on the fourth communication parameter is used as model input data (or referred to as training data) of the third neural network model, and the third communication parameter is used as a corresponding label), and the first neural network model is obtained through the third processing process.

Optionally, processing related to a conventional communication module in embodiments of this application may include one or more of the following: encoding, rate matching, scrambling, modulation, layer mapping, precoding, resource element (resource element, RE) mapping, digital beamforming (beamforming, BF), inverse fast fourier transform (inverse fast Fourier transform, IFFT)/cyclic prefix (cyclic prefix, CP) addition, decoding, de-rate matching, descrambling, demodulation, inverse discrete fourier transform (inverse discrete Fourier transform, IDFT), channel equalization (or channel estimation), de-RE mapping, digital BF, fast fourier transform (fast Fourier transform, FFT)/CP removal, digital-to-analog (digital to analog, DA) conversion, analog BF, analog-to-digital (analog to digital, AD) conversion, or analog BF, scheduling, retransmission, or the like.

In addition, the communication parameter (for example, one or more of the first communication parameter to the fifth communication parameter) in embodiments of this application may include a parameter used in a communication process, for example, a bit rate of encoding and/or decoding, a sequence used for scrambling and/or descrambling, a modulation order and/or a demodulation order, a channel parameter, a communication rate, and a bit error rate.

In a possible implementation, before the first communication apparatus processes the first communication parameter based on the second neural network model to obtain the second communication parameter, the method further includes: the first communication apparatus performs communication based on the fifth communication parameter, where the fifth communication parameter is determined based on a communication signal received and/or sent by the first communication apparatus. The fifth communication parameter and the first communication parameter are used to process the fourth neural network model to obtain the second neural network model.

Specifically, before the first communication apparatus determines the second communication parameter based on the second neural network model, the first communication apparatus may further perform update processing on the fourth neural network model based on the fifth communication parameter in a process of performing communication based on the fifth communication parameter to obtain the second neural network model. Because the fifth communication parameter is determined based on the communication signal received and/or sent by the first communication apparatus, the fifth communication parameter can reflect an actual communication environment. In this manner, performance of the second neural network model obtained based on the fifth communication parameter can be improved, and the first communication apparatus can also reuse a communication signal to implement a model update. A specific sample in a model update process does not need to be collected, thereby reducing overheads.

Optionally, the fifth communication parameter and the first communication parameter being used to process the fourth neural network model to obtain the second neural network model may include that the fifth communication parameter and the first communication parameter may be used as inputs of the fourth neural network model, and the second neural network model is obtained through the third processing; or the fifth communication parameter and performance of a communication signal processed based on the first communication parameter may be used as inputs of the fourth neural network model, and the second neural network model is obtained through the third processing.

Optionally, the third communication parameter and the fifth communication parameter may be the same or partially the same. In this manner, a same communication parameter can be reused to process different neural network models, thereby further reducing overheads.

Optionally, the third communication parameter and the fifth communication parameter are different from each other.

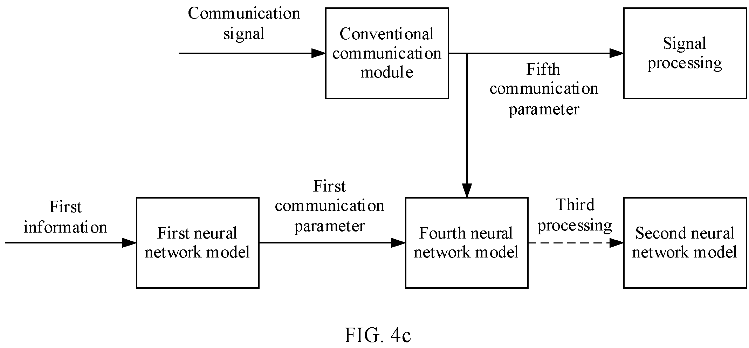

For example, FIG. 4c is a diagram of the fourth neural network model in the foregoing process.

In FIG. 4c, the first communication apparatus may process a received or sent communication signal based on a conventional communication module to obtain the fifth communication parameter. In addition, the fifth communication parameter may be used for signal processing, that is, the first communication apparatus may receive a signal or send a signal based on the fifth communication parameter.

In FIG. 4c, an input of the first neural network model may include the first information, an output of the first neural network model may include the first communication parameter, and the processing process may be similar to the first processing described above.

In FIG. 4c, in the fourth neural network model, the first communication parameter and the fifth communication parameter may be used as inputs of the fourth neural network model (or the performance of the communication signal processed based on the first communication parameter is used as model input data (or referred to as training data) of the fourth neural network model, and the fifth communication parameter is used as a corresponding label), and the second neural network model is obtained through the third processing process.

In a possible implementation, the method further includes: the first communication apparatus obtains third information, where the third information indicates communication performance corresponding to the first communication parameter processed based on the first neural network model. The first communication apparatus processing the first communication parameter based on the second neural network model to obtain the second communication parameter includes that the first communication apparatus processes the third information and the first communication parameter based on the second neural network model to obtain the second communication parameter.

Specifically, the first communication apparatus may further obtain the communication performance of performing communication based on the first communication parameter obtained based on the first neural network model, and the first communication apparatus can process the communication performance and the first communication parameter based on the second neural network model. In this manner, because a determining basis for determining the second communication parameter based on the second neural network model further includes communication performance, the second neural network model can determine a communication parameter based on feedback of the communication performance, to support real-time correction of the communication parameter based on the feedback of the communication performance, thereby improving correction flexibility.

It should be noted that, for the first communication apparatus, the first communication apparatus may obtain, in a plurality of manners, communication performance corresponding to a communication parameter (for example, the third information, and fourth information and fifth information described below).

For example, after the first communication apparatus receives a signal based on a communication parameter, the first communication apparatus may locally calculate signal quality information of the received signal, and the signal quality information may indicate communication performance corresponding to the communication parameter. For example, the signal quality information may include one or more of a bit error rate, a block error rate, reference signal received quality (reference signal received power, RSRP), and a signal to interference plus noise ratio (signal to interference plus noise ratio, SINR).

For another example, after the first communication apparatus sends a signal based on a communication parameter, the first communication apparatus may receive signal quality information fed back by a receiving party of the signal. The signal quality information may indicate communication performance corresponding to the communication parameter. For example, the signal quality information may include one or more of hybrid automatic repeat request-acknowledgment (hybrid automatic repeat request-acknowledgment, HARQ-ACK) information, a bit error rate, a block error rate, an RSRP, and an SINR.

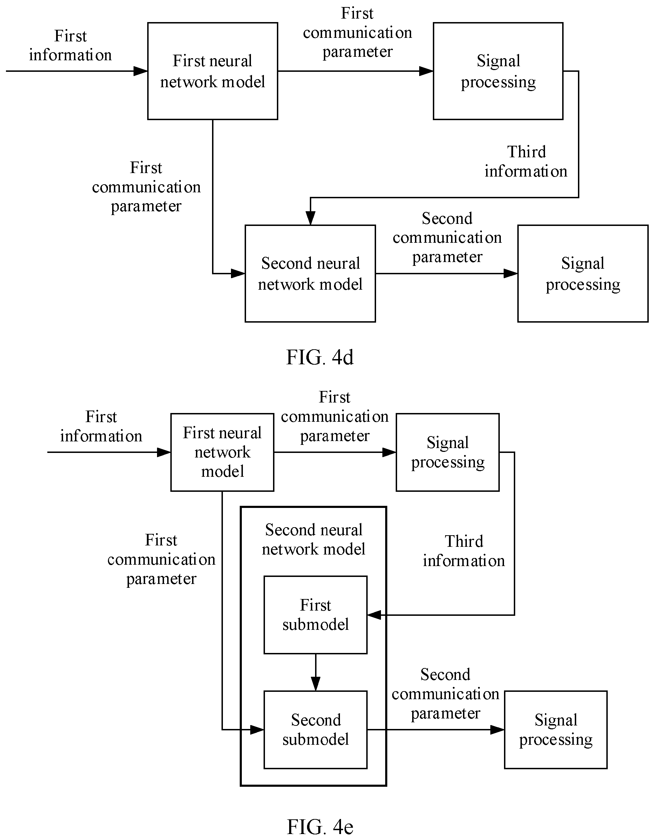

For example, FIG. 4d is a diagram of the second neural network model in the foregoing process.

In FIG. 4d, for the first neural network model, a processing process is as follows: an input of the first neural network model may include the first information, and an output of the first neural network model includes the first communication parameter. Then, the first communication apparatus may process the received or sent communication signal based on the first communication parameter output by the first neural network model. In addition, the first communication apparatus may obtain the third information indicating the performance of the received or sent communication signal. Optionally, in this process, the first communication parameter output by the first neural network model is used for signal processing. Therefore, the process may be referred to as a use process of the first neural network model.

In FIG. 4d, for the second neural network model, an input of the second neural network model may include the first communication parameter and the third information, an output of the second neural network model may include the second communication parameter, and the first communication apparatus may subsequently process a signal based on the second communication parameter. Optionally, in this process, the second communication parameter obtained by performing second processing of the second neural network model on the first communication parameter output by the first neural network model is used for signal processing. Therefore, the process may be referred to as a correction (or real-time correction) process of the first neural network model.

Optionally, the second neural network model includes a first submodel and a second submodel. After the first submodel is used to preprocess the third information to obtain a processing result, the second submodel is used to perform fusion processing on the processing result and the first communication parameter to obtain the second communication parameter.

Optionally, the preprocessing may include one or more of dimension alignment, implicit extraction of information related to a wireless parameter, denoising, normalization, standardization, and the like.

For example, as shown in FIG. 4e, when the second neural network model includes the first submodel and the second submodel, FIG. 4d may be expressed as an implementation process shown in FIG. 4e. To be specific, for implementation of each model in FIG. 4e, refer to the process shown in FIG. 4d. Different from the implementation process shown in FIG. 4d, a process executed by the second neural network model is separately processed by using the first submodel and the second submodel.

In a possible implementation, in the process of performing processing based on the third information, when at least one of the following is satisfied, the first communication apparatus processing the third information and the first communication parameter based on the second neural network model to obtain the second communication parameter includes:
the communication performance corresponding to the first communication parameter is lower than a threshold; and
it is determined that a duration of performing communication based on the first communication parameter is greater than or equal to a preset duration.

Specifically, when at least one of the foregoing is satisfied, the first communication apparatus may determine that the communication parameter output by the first neural network model needs to be processed by using the second neural network model. Therefore, the first communication apparatus may trigger processing, based on the second neural network model, the third information and the first communication parameter to obtain the second communication parameter. In the foregoing manner, an event-based trigger manner and a fixed-periodicity-based trigger manner are provided, to improve solution implementation flexibility.

In a possible implementation, in the process based on the first communication parameter, the method further includes: when at least one of the following is satisfied, the first communication apparatus processing the signal based on the first communication parameter includes:
the performance corresponding to the first communication parameter is higher than or equal to the threshold; and
it is determined that the duration of performing communication based on the first communication parameter is less than the preset duration.

Specifically, when at least one of the foregoing is satisfied, the first communication apparatus may determine that the communication parameter output by the first neural network model does not need to be processed currently by using the second neural network model. Therefore, the first communication apparatus may trigger the first communication apparatus to process a signal based on the first communication parameter without participation of the second neural network model. In the foregoing manner, an event-based trigger manner and a fixed-periodicity-based trigger manner are provided, to improve solution implementation flexibility.

In a possible implementation of the method shown in FIG. 3, after the first communication apparatus processes the signal based on the second communication parameter in S303, the method further includes: the first communication apparatus obtains the fourth information, where the fourth information indicates communication performance corresponding to the second communication parameter; and the first communication apparatus performs model update processing on the first neural network model and/or the second neural network model based on the fourth information. Specifically, the first communication apparatus may further obtain the communication performance of performing communication based on the second communication parameter, and the first communication apparatus can perform model update processing on the first neural network model and/or the second neural network model based on the communication performance. In this manner, because the communication performance indicated by the fourth information may indicate the performance of the first neural network model and/or the performance of the second neural network model, the neural network model can be corrected based on feedback of the communication performance, thereby improving correction flexibility.

Optionally, the model update processing may be replaced with other model processing, for example, one or more of training, iteration, optimization, fine-tuning, update, tuning, and improvement.

Optionally, in the foregoing process, when at least one of the following is satisfied, the first communication apparatus performing model update processing on the first neural network model and/or the second neural network model based on the fourth information includes:
a quantity of times that the performance corresponding to the second communication parameter is lower than a threshold reaches a threshold; and
it is determined that a duration of performing communication based on the second communication parameter is greater than or equal to a preset duration.

Specifically, when at least one of the foregoing is satisfied, the first communication apparatus may determine that model update processing needs to be performed on the second neural network model and/or the first neural network model. Therefore, the first communication apparatus may trigger, based on the fourth information, model update processing on the first neural network model and/or the second neural network model. In the foregoing manner, an event-based trigger manner and a fixed-periodicity-based trigger manner are provided, to improve solution implementation flexibility.

For example, FIG. 4f is a diagram of model update processing in the foregoing process.

In FIG. 4f, for the first neural network model and the second neural network model, one processing process is as follows: an input of the first neural network model may include the first information, and an output of the first neural network model includes the first communication parameter; and then an input of the second neural network model may include the first communication parameter, and an output of the second neural network model includes the second communication parameter. Then, the first communication apparatus may process the received or sent communication signal based on the second communication parameter.

In FIG. 4f, for the first neural network model, another processing process is as follows: the first communication apparatus obtains the fourth information indicating the communication performance of the second communication parameter, and the fourth information may be used as model input data of the first neural network model, to implement a model update process through the third processing process. Optionally, in the model update process, in addition to using the fourth information as the model input data (or referred to as training data) of the first neural network model, another communication parameter (the another communication parameter may be determined based on a communication signal received by the first communication apparatus, for example, the third communication parameter and the fifth communication parameter described above) may be used as a corresponding label, to implement a model update process through the third processing process.

In FIG. 4f, for the second neural network model, another processing process is as follows: the first communication apparatus obtains the fourth information indicating the communication performance of the second communication parameter, and the fourth information may be used as model input data of the second neural network model, to implement a model update process through the third processing process. Optionally, in the model update process, in addition to using the fourth information as the model input data (or referred to as training data) of the second neural network model, another communication parameter (the another communication parameter may be determined based on a communication signal received by the first communication apparatus, for example, the third communication parameter and the fifth communication parameter described above) may be used as a corresponding label, to implement a model update process through the third processing process.

FIG. 5 is a diagram of another implementation of a communication method according to this application. The method includes the following steps.

S501: A first communication apparatus performs communication based on a third communication parameter, where the third communication parameter is determined based on a communication signal received and/or sent by the first communication apparatus. The third communication parameter and a fourth communication parameter are used to process a third neural network model to obtain a first neural network model. The fourth communication parameter is a communication parameter obtained by processing collected second information based on the third neural network model.

S502: The first communication apparatus processes collected first information based on the first neural network model to obtain a first communication parameter.

S503: The first communication apparatus processes a signal based on the first communication parameter.

Based on the technical solution shown in FIG. 5, in a process in which the first communication apparatus performs communication based on the third communication parameter, the first communication apparatus may process the third neural network model based on the third communication parameter to obtain the first neural network model. Because the third communication parameter is determined based on the communication signal received and/or sent by the first communication apparatus, the third communication parameter can reflect an actual communication environment. In this manner, performance of the first neural network model obtained based on the third communication parameter can be improved, and the first communication apparatus can also reuse a communication signal to implement model processing. A specific sample in a model processing process does not need to be collected, thereby reducing overheads.

It should be noted that, for an implementation process of the third neural network model in the foregoing process, reference may be made to the foregoing implementation example shown in FIG. 4b.

In a possible implementation of the method shown in FIG. 5, after the first communication apparatus processes the signal based on the first communication parameter in S502, the method further includes: the first communication apparatus obtains fifth information, where the fifth information indicates performance corresponding to the first communication parameter; and the first communication apparatus performs model update processing on the first neural network model based on the fifth information.

Optionally, in a model update processing process, in addition to using the fifth information as model input data (or referred to as training data) of the first neural network model, another communication parameter (the another communication parameter may be determined based on a communication signal received by the first communication apparatus, for example, the third communication parameter and the fifth communication parameter described above) may be used as a corresponding label, to implement a model update process through a third processing process.

Specifically, the first communication apparatus may further obtain communication performance of performing communication based on the first communication parameter, and the first communication apparatus can perform model update processing on the first neural network model based on the communication performance. In this manner, because the communication performance indicated by the fifth information may indicate the performance of the first neural network model, the neural network model can be corrected based on feedback of the communication performance, thereby improving correction flexibility.

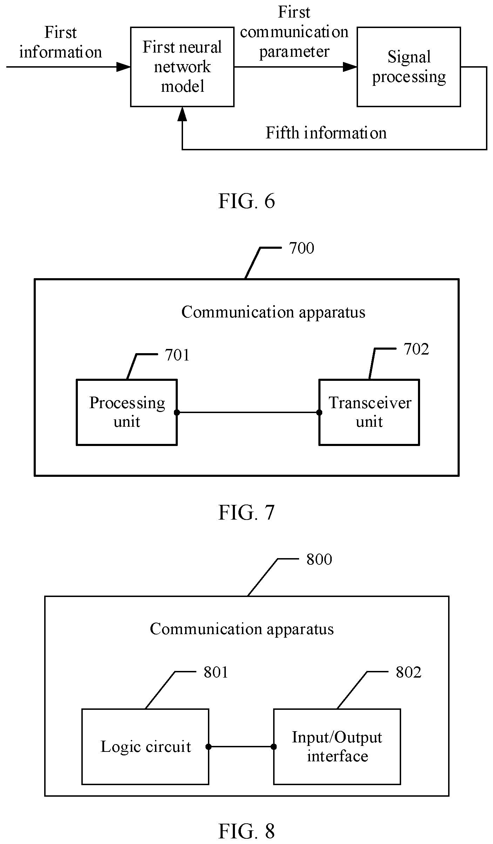

For example, FIG. 6 is a diagram of model update processing in the foregoing process.

In FIG. 6, for the first neural network model, a processing process is as follows: an input of the first neural network model may include the first information, and an output of the first neural network model includes the first communication parameter. Then, the first communication apparatus may process the received or sent communication signal based on the first communication parameter.

In FIG. 6, for the first neural network model, another processing process is as follows: the first communication apparatus obtains fifth information indicating the communication performance of the first communication parameter, and the fifth information may be used as model input data (or referred to as training data) of the first neural network model, to implement a model update process through the third processing process.

Optionally, the first communication apparatus performing model update processing on the first neural network model based on the fifth information includes: when at least one of the following is satisfied, the first communication apparatus performing model update processing on the first neural network model based on the fifth information includes:
the performance corresponding to the first communication parameter is lower than a threshold; and
it is determined that a duration of performing communication based on the first communication parameter is greater than or equal to a preset duration.

Specifically, when at least one of the foregoing is satisfied, the first communication apparatus may determine that model update processing needs to be performed on the first neural network model. Therefore, the first communication apparatus may trigger, based on the fifth information, model update processing on the first neural network model. In the foregoing manner, an event-based trigger manner and a fixed-periodicity-based trigger manner are provided, to improve solution implementation flexibility.

With reference to FIG. 7, an embodiment of this application provides a communication apparatus 700. The communication apparatus 700 can implement functions of the first communication apparatus in the foregoing method embodiments, and therefore can achieve beneficial effects of the foregoing method embodiments. In this embodiment of this application, the communication apparatus 700 may be a first communication apparatus, or may be an integrated circuit or an element in a first communication apparatus, for example, a chip, a baseband chip, a modem chip, an SoC chip including a modem core, a system in package (system in package, SIP) chip, a communication module, a chip system, or a processor.

It should be noted that a transceiver unit 702 may include a sending unit and a receiving unit that are respectively configured to perform sending and receiving.

In a possible implementation, when the apparatus 700 is configured to perform the method performed by the first communication apparatus in FIG. 3 and the related embodiment, the apparatus 700 includes a processing unit 701 and the transceiver unit 702. The processing unit 701 is configured to process collected first information based on a first neural network model to obtain a first communication parameter. The processing unit 701 is further configured to process the first communication parameter based on a second neural network model to obtain a second communication parameter. The transceiver unit 702 is configured to process a signal based on the second communication parameter.

In a possible implementation, when the apparatus 700 is configured to perform the method performed by the first communication apparatus in FIG. 3 and the related embodiment, the apparatus 700 includes a processing unit 701 and the transceiver unit 702. The processing unit 701 is configured to perform communication based on a third communication parameter, where the third communication parameter is determined based on a communication signal received and/or sent by the first communication apparatus. The third communication parameter and the fourth communication parameter are used to process a third neural network model to obtain a first neural network model. The fourth communication parameter is a communication parameter obtained by processing collected second information based on the third neural network model. The processing unit 701 is further configured to process collected first information based on the first neural network model to obtain a first communication parameter. The transceiver unit 702 is configured to process a signal based on the first communication parameter.

In a possible design, when the communication apparatus 700 is a terminal device or a communication module in a terminal, a function of the processing unit 701 may be implemented by one or more processors. Specifically, the processor may include a modem chip, or an SoC chip or an SIP chip that includes a modem core. A function of the transceiver unit 702 may be implemented by a transceiver circuit.

In a possible design, when the communication apparatus 700 is a circuit or a chip that is responsible for a communication function in a terminal, for example, a modem chip, an SoC chip or a SIP chip that includes a modem core, functions of the processing unit 701 may be implemented by a circuit system that includes one or more processors or processor cores in the chip. A function of the transceiver unit 702 may be implemented by an interface circuit or a data transceiver circuit on the foregoing chip.

It should be noted that for details of content such as an information execution process of the unit of the communication apparatus 700, reference may be made to descriptions in the foregoing method embodiments of this application. Details are not described herein again.

FIG. 8 is a diagram of another structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface. The communication interface may be the input/output interface 802 in FIG. 8. The input/output interface 802 may include an input interface and an output interface. Alternatively, the communication interface may be a transceiver circuit, and the transceiver circuit may include an input interface circuit and an output interface circuit.

In a possible implementation, when the apparatus 800 is configured to perform the method performed by the first communication apparatus in FIG. 3 and the related embodiment, the logic circuit 801 is configured to process collected first information based on a first neural network model to obtain a first communication parameter. The logic circuit 801 is further configured to process the first communication parameter based on a second neural network model to obtain a second communication parameter. The input/output interface 802 is configured to process a signal based on the second communication parameter.

In a possible implementation, when the apparatus 800 is configured to perform the method performed by the first communication apparatus in FIG. 3 and the related embodiment, the logic circuit 801 is configured to perform communication based on a third communication parameter, where the third communication parameter is determined based on a communication signal received and/or sent by the first communication apparatus. The third communication parameter and the fourth communication parameter are used to process a third neural network model to obtain a first neural network model. The fourth communication parameter is a communication parameter obtained by processing collected second information based on the third neural network model. The logic circuit 801 is further configured to process collected first information based on the first neural network model to obtain a first communication parameter. The input/output 802 is configured to process a signal based on the first communication parameter.

The logic circuit 801 and the input/output interface 802 may further perform other steps performed by the first communication apparatus in any embodiment, and implement corresponding beneficial effects. Details are not described herein again.

In a possible implementation, the processing unit 701 shown in FIG. 7 may be the logic circuit 801 in FIG. 8.

Optionally, the logic circuit 801 may be a processing apparatus, and a part of or all functions of the processing apparatus may be implemented by software. A part or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processors (digital signal processors, DSPs), microcontroller units (microcontroller units, MCUs), programmable logic devices (programmable logic devices, PLDs), or other integrated chips, or any combination of the foregoing chips or processors.

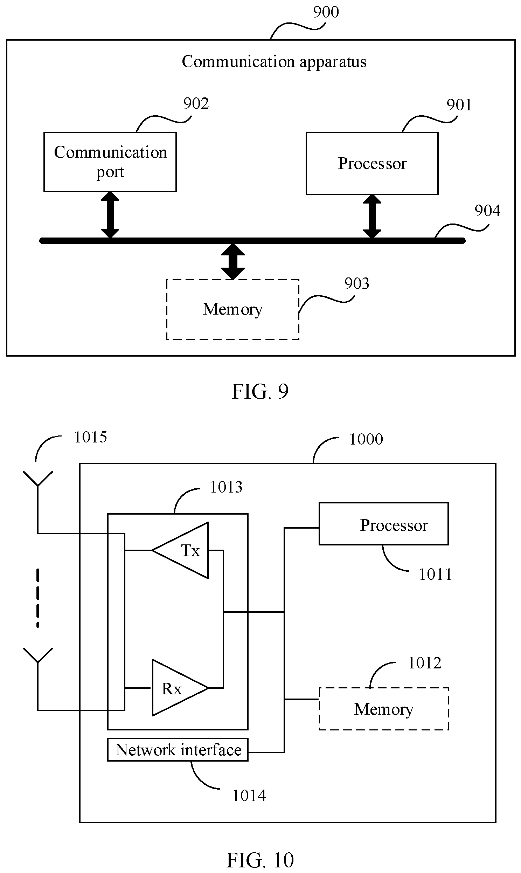

FIG. 9 shows a communication apparatus 900 in the foregoing embodiments according to an embodiment of this application. The communication apparatus 900 may be specifically a communication apparatus serving as a terminal device in the foregoing embodiments. An example shown in FIG. 9 is that the terminal device is implemented as the terminal device (or a component in the terminal device).

In a possible diagram of a logical structure of the communication apparatus 900, the communication apparatus 900 may include but is not limited to at least one processor 901 and a communication port 902.

The transceiver unit 702 shown in FIG. 7 may be a communication interface, the communication interface may be the communication port 902 in FIG. 9, and the communication port 902 may include an input interface and an output interface. Alternatively, the communication port 902 may be a transceiver circuit, and the transceiver circuit may include an input interface circuit and an output interface circuit.

Further, optionally, the apparatus may further include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

It should be noted that the communication apparatus 900 shown in FIG. 9 may be specifically configured to implement the steps implemented by the terminal device in the foregoing method embodiments, and achieve the technical effects corresponding to the terminal device. For a specific implementation of the communication apparatus shown in FIG. 9, refer to the descriptions in the foregoing method embodiments. Details are not described herein again.

FIG. 10 is a diagram of a structure of a communication apparatus 1000 in the foregoing embodiment according to an embodiment of this application. The communication apparatus 1000 may be specifically the communication apparatus serving as the network device in the foregoing embodiment. In the example shown in FIG. 10, the network device is implemented as a network device (or a component in a network device). For a structure of the communication apparatus, refer to the structure shown in FIG. 10.

The communication apparatus 1000 includes at least one processor 1011 and at least one network interface 1014. Further, optionally, the communication apparatus further includes at least one memory 1012, at least one transceiver 1013, and one or more antennas 1015. The processor 1011, the memory 1012, and the transceiver 1013 are connected to the network interface 1014, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface, for example, an S1 interface, between the communication apparatus and a core network device. The network interface may include a network interface, for example, an X2 interface or an Xn interface, between the communication apparatus and another communication apparatus (for example, another network device or core network device).

The transceiver unit 702 shown in FIG. 7 may be a communication interface, the communication interface may be the network interface 1014 in FIG. 10, and the network interface 1014 may include an input interface and an output interface. Alternatively, the network interface 1014 may be a transceiver circuit, and the transceiver circuit may include an input interface circuit and an output interface circuit.

The processor 1011 is mainly configured to process a communication protocol and communication data, control the entire communication apparatus, execute a software program, and process data of the software program, for example, configured to support the communication apparatus in performing the actions in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1011 in FIG. 10. A person skilled in the art may understand that the baseband processor and the central processing unit each may be an independent processor, and are interconnected through a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1012 may be independent, and connected to the processor 1011. Optionally, the memory 1012 and the processor 1011 may be integrated together, for example, integrated in a chip. The memory 1012 can store program code for executing technical solutions in embodiments of this application, and execution of the program code is controlled by the processor 1011. Various types of computer program code executed may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in embodiments of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to receive the radio frequency signal from the antenna, convert the radio frequency signal into a digital baseband signal or a digital intermediate frequency signal, and provide the digital baseband signal or the digital intermediate frequency signal for the processor 1011, so that the processor 1011 further processes, for example, performs demodulation processing and decoding processing on, the digital baseband signal or the digital intermediate frequency signal. In addition, the transmitter Tx of the transceiver 1013 is further configured to receive a modulated digital baseband signal or digital intermediate frequency signal from the processor 1011, convert the modulated digital baseband signal or digital intermediate frequency signal into a radio frequency signal, and send the radio frequency signal through the one or more antennas 1015. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital intermediate frequency signal to obtain the radio frequency signal. A sequence of the up-mixing processing and the digital-to-analog conversion is adjustable. The digital baseband signal and the digital intermediate frequency signal may be collectively referred to as a digital signal.

The transceiver 1013 may also be referred to as a transceiver unit, a transceiver machine, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit. The receiving unit may also be referred to as a receiving device, an input interface, a receiver circuit, or the like. The sending unit may be referred to as a transmitting device, a transmitter, a transmitter circuit, or the like.

It should be noted that the communication apparatus 1000 shown in FIG. 10 may be specifically configured to implement the steps implemented by the network device in the foregoing method embodiments, and achieve the technical effects corresponding to the network device. For a specific implementation of the communication apparatus 1000 shown in FIG. 10, refer to the descriptions in the foregoing method embodiments. Details are not described herein again.

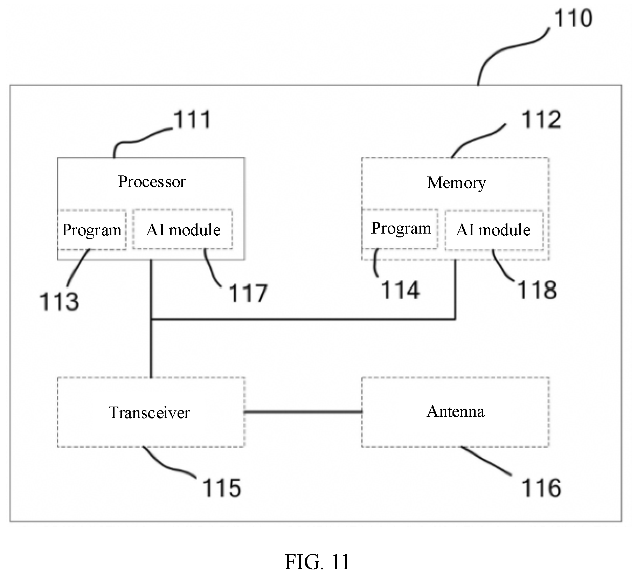

FIG. 11 is a diagram of a structure of a communication apparatus in the foregoing embodiment according to an embodiment of this application.

It may be understood that the communication apparatus 110 includes, for example, modules, units, elements, circuits, or interfaces, which are appropriately configured together to perform the technical solutions provided in this application. The communication apparatus 110 may be the terminal device or the network device described above, or may be a component (for example, a chip) in these devices, to implement the method described in the following method embodiments. The communication apparatus 110 includes one or more processors 111. The processor 111 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, the RAN node, the terminal, or the chip), execute a software program, and process data of the software program.

Optionally, in a design, the processor 111 may include a program 113 (which may also be referred to as code or instructions sometimes). The program 113 may be run on the processor 111, to enable the communication apparatus 110 to perform the methods described in the following embodiments. In another possible design, the communication apparatus 110 includes a circuit (not shown in FIG. 11).

Optionally, the communication apparatus 110 may include one or more memories 112 storing a program 114 (which may also be referred to as code or instructions sometimes). The program 114 may be run on the processor 111, so that the communication apparatus 110 performs the methods described in the foregoing method embodiments.

Optionally, the processor 111 and/or the memory 112 may include AI modules 117 and 118, and the AI module is configured to implement an AI-related function. The AI module may be implemented by using software, hardware, or a combination of software and hardware. For example, the AI module may include a radio intelligence control (radio intelligence control, RIC) module. For example, the AI module may be a near-real-time RIC or a non-real-time RIC.

Optionally, the processor 111 and/or the memory 112 may further store data. The processor and the memory may be separately disposed, or may be integrated together.

Optionally, the communication apparatus 110 may further include a transceiver 115 and/or an antenna 116. The processor 111 sometimes may also be referred to as a processing unit, and controls the communication apparatus (for example, the RAN node or the terminal). The transceiver 115 sometimes may also be referred to as a transceiver unit, a transceiver machine, a transceiver circuit, a transceiver, or the like, and is configured to implement transmission and reception functions of the communication apparatus through the antenna 116.

The processing unit 701 shown in FIG. 7 may be the processor 111. The transceiver unit 702 shown in FIG. 7 may be a communication interface. The communication interface may be the transceiver 115 in FIG. 11. The transceiver 115 may include an input interface and an output interface. Alternatively, the transceiver 115 may be a transceiver circuit, and the transceiver circuit may include an input interface circuit and an output interface circuit.

An embodiment of this application further provides a computer-readable storage medium. The storage medium is configured to store one or more computer-executable instructions. When the computer-executable instructions are executed by a processor, the processor performs the method in the possible implementations of the first communication apparatus or the second communication apparatus in the foregoing embodiments.

An embodiment of this application further provides a computer program product (or referred to as a computer program). When the computer program product is executed by a processor, the processor performs the method in the possible implementations of the first communication apparatus.

An embodiment of this application further provides a chip system. The chip system includes at least one processor configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first communication apparatus in the foregoing method embodiments.

An embodiment of this application further provides a communication system. An architecture of the network system includes the first communication apparatus in any one of the foregoing embodiments.

Optionally, the communication system further includes another communication apparatus communicating with the first communication apparatus.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms. Whether a specific function is performed by hardware or software depends on particular application and design constraint conditions of the technical solutions. A person skilled in the art may use different methods to implement the described functions for each particular application, but it should not be considered that the implementation goes beyond the scope of this application.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions in the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part making a contribution, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, comprising:
processing collected first information based on a first neural network model to obtain a first communication parameter;
processing the first communication parameter based on a second neural network model to obtain a second communication parameter; and
processing a signal based on the second communication parameter.

2. The method according to claim 1, wherein before processing the collected first information based on the first neural network model to obtain the first communication parameter, the method further comprises:
performing communication based on a third communication parameter, wherein the third communication parameter is determined based on a communication signal received and/or sent by a first communication apparatus, wherein
the third communication parameter and a fourth communication parameter are used to process a third neural network model to obtain the first neural network model, and the fourth communication parameter is a communication parameter obtained by processing collected second information based on the third neural network model.

3. The method according to claim 1 or 2, wherein before processing the first communication parameter based on the second neural network model to obtain the second communication parameter, the method further comprises:
performing communication based on a fifth communication parameter, wherein the fifth communication parameter is determined based on a communication signal received and/or sent by the first communication apparatus, wherein
the fifth communication parameter and the first communication parameter are used to process a fourth neural network model to obtain the second neural network model.

4. The method according to any one of claims 1 to 3, wherein the method further comprises:
obtaining third information, wherein the third information indicates communication performance corresponding to the first communication parameter; and
processing the first communication parameter based on the second neural network model to obtain the second communication parameter comprises:
processing the third information and the first communication parameter based on the second neural network model to obtain the second communication parameter.

5. The method according to claim 4, wherein the second neural network model comprises a first submodel and a second submodel, and after the first submodel is configured to preprocess the first information to obtain a processing result, the second submodel is configured to perform fusion processing on the processing result and the first communication parameter to obtain the second communication parameter.

6. The method according to claim 4 or 5, wherein processing the third information and the first communication parameter based on the second neural network model to obtain the second communication parameter comprises:
when at least one of the following is satisfied, processing the third information and the first communication parameter based on the second neural network model to obtain the second communication parameter comprises:
the communication performance corresponding to the first communication parameter is lower than a threshold; and
it is determined that a duration of performing communication based on the first communication parameter is greater than or equal to a preset duration.

7. The method according to any one of claims 4 to 6, wherein the method further comprises:
when at least one of the following is satisfied, processing a signal based on the first communication parameter comprises:
the performance corresponding to the first communication parameter is higher than or equal to the threshold; and
it is determined that the duration of performing communication based on the first communication parameter is less than the preset duration.

8. The method according to any one of claims 1 to 7, wherein after processing the signal based on the second communication parameter, the method further comprises:
obtaining fourth information, wherein the fourth information indicates communication performance corresponding to the second communication parameter; and
performing model update processing on the first neural network model and/or the second neural network model based on the fourth information.

9. The method according to claim 8, wherein performing model update processing on the first neural network model and/or the second neural network model based on the fourth information comprises:
when at least one of the following is satisfied, performing model update processing on the first neural network model and/or the second neural network model based on the fourth information comprises:
a quantity of times that the performance corresponding to the second communication parameter is lower than a threshold reaches a threshold; and
it is determined that a duration of performing communication based on the second communication parameter is greater than or equal to a preset duration.

10. The method according to any one of claims 1 to 9, wherein the collected first information comprises at least one of the following:
environment information, user information, or task information.

11. A communication method, comprising:
performing communication based on a third communication parameter, wherein the third communication parameter is determined based on a communication signal received and/or sent by a first communication apparatus, the third communication parameter and a fourth communication parameter are used to process a third neural network model to obtain a first neural network model, and the fourth communication parameter is a communication parameter obtained by processing collected second information based on the third neural network model;
processing collected first information based on the first neural network model to obtain a first communication parameter; and
processing a signal based on the first communication parameter.

12. The method according to claim 11, wherein after processing the signal based on the first communication parameter, the method further comprises:
obtaining fifth information, wherein the fifth information indicates performance corresponding to the first communication parameter; and
performing model update processing on the first neural network model based on the fifth information.

13. The method according to claim 12, wherein performing model update processing on the first neural network model based on the fifth information comprises:
when at least one of the following is satisfied, performing model update processing on the first neural network model based on the fifth information comprises:
the performance corresponding to the first communication parameter is lower than a threshold; and
it is determined that a duration of performing communication based on the first communication parameter is greater than or equal to a preset duration.

14. A communication apparatus, comprising a module configured to perform the method according to any one of claims 1 to 13.

15. A communication apparatus, comprising at least one processor, wherein the at least one processor is configured to perform the method according to any one of claims 1 to 13.

16. A readable storage medium, wherein the storage medium stores a computer program or instructions; and when the computer program or the instructions are executed by a communication apparatus, the method according to any one of claims 1 to 13 is implemented.
